# EUROPEAN PATENT APPLICATION

(11) **EP 2 055 632 A1**
(43) Date of publication of application: **06.05.2009**
(21) Application number: 07721405.4
(22) Date of filing: 11.06.2007
(51) Int. Cl.: B64F 1/305

(54) **A CABLE CONVEYING APPARATUS FOR PASSENGER BRIDGE**

(30) Priority: 09.08.2006 CN 200610062056
(71) Applicant: China International Marine Containers (Group) Ltd., Shenzhen Guangdong 518067 (CN); Shenzhen CIMC-Tianda Airport Support Ltd., Shenzhen Guangdong 518067 (CN)
(72) Inventor: CHENG, Xuehai, Guangdong 518067 (CN); ZHANG, Zhaohong, Guangdong 518067 (CN); TAN, Handong, Guangdong 518067 (CN)
(74) Representative: Cabinet Plasseraud
(86) International application number: PCT/CN2007/001832
(87) International publication number: WO 2008/019561

(57) **Abstract**

A cable conveying device for passenger bridge, especially for a three-channel passenger bridge. The first towline device is arranged under the first channel and comprises a first towline rack and a first towline. The first towline rack includes a fixed end that is connected with the rear end of the first channel and a free end that is movable relatively to and along a guide rail arranged in the second channel. Two ends of the first towline are connected with the first towline rack and the second channel, respectively. The second towline device is arranged under the first channel and comprises a second towline rack and a second towline. The second towline rack includes a fixed end that is connected with the rear end of the second channel and movable with the second channel and a free end that is movable relatively to and along a second guide arranged on the third channel. Two ends of the second towline are connected with the second towline rack and the third channel, respectively. When the second channel is retracted and sheathed into the first channel, the second towline rack is retracted into the first towline rack and is superposed with the first towline rack. This device is of a longer service life and smaller outlook size, and can be loaded with more cables.

## Description

### FIELD OF THE INVENTION

The present invention relates to a passenger bridge, especially to a cable conveying device for the passenger bridge.

### BACKGROUND OF THE INVENTION

In a current three-channel passenger bridge, a first channel is connected with the pier of the passenger bridge at the rear end of said first channel, while a second channel is telescopically sheathed onto the first channel, and while a third channel is telescopically sheathed onto the second channel. When the passenger bridge is fully extended, the front end of the first channel is connected with the rear end of the second channel, and the front end of the second channel being connected with the rear end of the third channel. The cable conveyance therein is realized through two sets of towline devices. Generally, the towlines in said two sets of towline devices are respectively arranged vertically and horizontally. In the vertical arrangement, hinge center lines of the links of the towline are perpendicular to the horizontal supporting surface, i.e., the side surfaces of the links of the towline are in contact with the horizontal supporting surface. In the horizontal arrangement, the hinge center lines of the links of the towline are parallel to the horizontal supporting surface, i.e., the side surfaces of the links of the towline are perpendicular to the horizontal supporting surface. The cable conveying device for the passenger bridge with this structure, on one hand, is of a short service life, because the towline is damageable due to the sliding friction during the movement between the vertically-arranged towline and the horizontal supporting surface and the large moving resistance. On the other hand, when the channels of the passenger bridge are telescoped, the vertically-arranged towline device must be fitted to the horizontally-arranged towline device. Thus causes the whole device is of a larger outlook size with less loadable cables.

### SUMMARY OF THE INVENTION

It is the objective of the invention to overcome one or more shortages of the prior art by providing a cable conveying device for a passenger bridge, which has longer service life, smaller outlook size and more loadable cables.

The objective of the invention is realized by providing a cable conveying device for passenger bridge, especially for a three-channel passenger bridge. Said cable conveying device comprises a first towline device, which includes a first towline and a first towline rack for carrying cables and disposing the first towline, and a second towline device, which includes a second towline and a second towline rack for carrying cables and disposing the second towline. The first towline rack is arranged under the first channel and comprises a first fixed end and a first free end. The first fixed end is connected with a rear end of the first channel, while the first free end is movable relatively to and along a first guide rail arranged in the second channel, wherein the first towline can be extended horizontally alone the first towline rack with its two ends hinged to the first towline rack and the second channel, respectively. The second towline rack is arranged under the second channel and comprises a second fixed end and a second free end. The second fixed end is connected with a rear end of the second channel and movable with said second channel, while the second free end is movable relatively to and along a second guide rail arranged in the third channel, wherein the second towline can be extended horizontally on the second towline rack with its two ends hinged to the second towline rack and the third channel, respectively. When the second channel is retracted and sheathed into the first channel, the second towline rack is retracted into the first towline rack and is superposed with the first towline rack.

As compared to the prior art, the cable conveying device for passenger bridge according to the present invention adopts only horizontally-arranged towlines, which can reduce the moving resistance and prolong the life of components and parts in said device. The second towline rack can be retracted in and superposed with the said first towline rack, so that the whole device structure is more compact and can be loaded with more cables. Besides, the truss structure of towline racks can save more manufacturing materials.

### BRIEF DESCRIPTION OF THE DRAWINGS

The invention will be now described in details with preferred embodiments and accompanied drawings, in which:

Firg.1 is a schematic drawing of the cable conveying device for a passenger bridge according to the invention;

Fig.2 is a schematic drawing of the cable conveying device according to the invention when the passenger bridge is fully extended;

Fig.3 is a schematic drawing of the cable conveying device according to the invention when the passenger bridge is not fully extended or fully retracted;

Fig.4 is a schematic drawing of the cable conveying device according to the invention when the passenger bridge is retracted;

Fig.5 is a schematic drawing showing a embodiment of the cable conveying device according to the invention when the passenger bridge is fully extended;

Fig.6 is a schematic drawing of the first towline rack in Fog.5;

Fig.7 is a schematic drawing of the second towline rack in Fig.5;

Fig.8 is a schematic sectional view showing the free end of the first towline rack and/or the second towline rack in Fig. 5 fitted with a location-limiting device;

Fig.9 is a sectional view showing the first towline rack and the second towline rack in Fig.5 fitted with each other.

### DETAILED DESCRIPTION OF THE PREFERRED EMBODIMENT

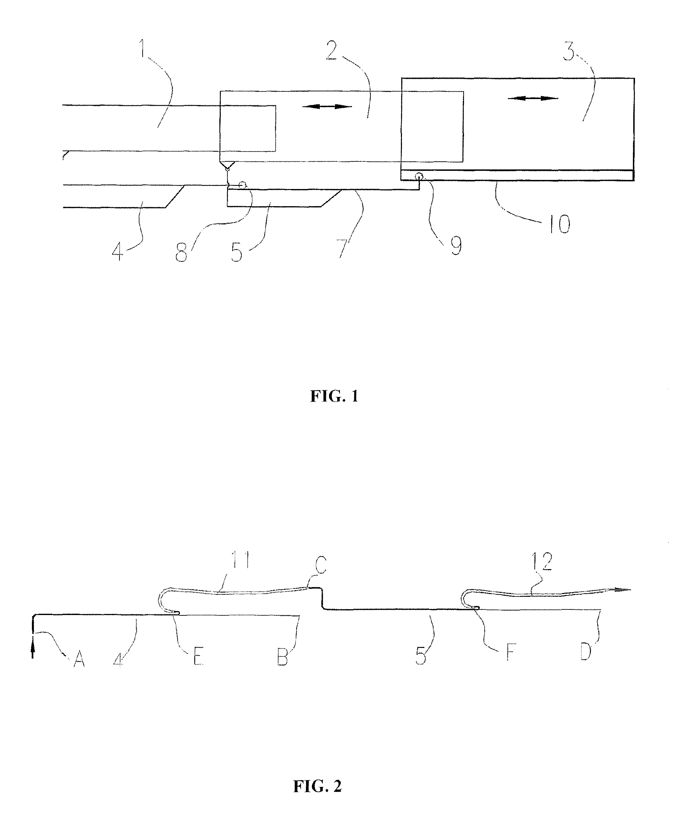

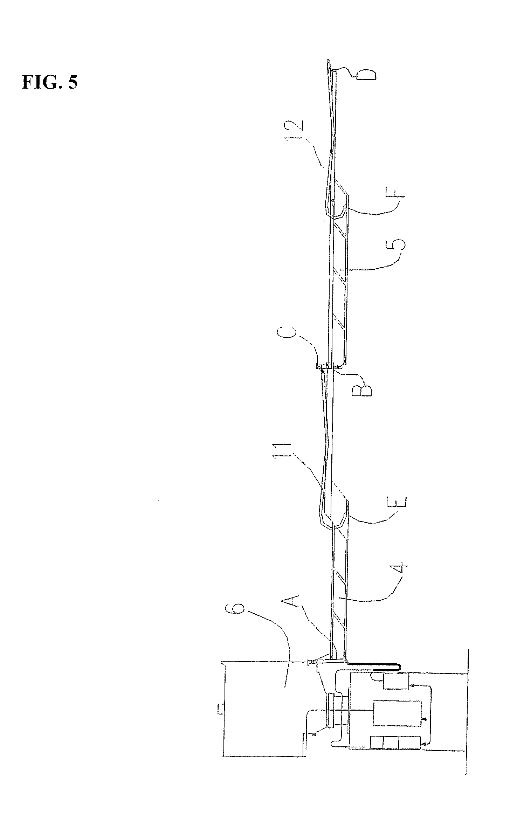

As shown in Fig.1 and Fig.5, a passenger bridge comprises a first channel 1, a second channel 2 and a third channel 3. When the passenger bridge is in operation, the second channel 2 and the third channel 3 can be telescoped pro rata according to the extension length required by the passenger bridge. When the passenger bridge is fully extended, the front end (i.e., the end at the right side in Fig.1) of the first channel 1 is connected with the rear end (i.e., the end at the left side in Fig.1) of the second channel 2, while the front end (the end at the right side in Fig.1) of the channel 2 is connected with the rear end (the end at the left side in Fig.1) of the third channel 3. According to requirements, the first channel 1, the second channel 2 and the third channel 3 can be sized and configured so that the first channel 1, the second channel 2 and the third channel 3 can be superposed and sheathed with each other as the passenger bridge is retracted. A first towline device for conveying cables is arranged under the first channel 1 and a second towline device for conveying cables is arranged under the second channel 2, each towline device including a towline rack and a respective towline. Fig.1 shows the towline rack 4 of the first towline device and the towline rack 5 of the second towline device without showing the respective towlines. As shown in Fig.5, the rear end of the first channel 1 is connected with a pier 6 of the passenger bridge. The end A of the towline rack 4 is hinged to the rear end of the first channel 1, while the end B of the towline rack 4 is movable along a guide rail arranged in the second channel 2. The end C of the towline rack 5 is connected with the rear end of the second channel 2, while the end D of the towline rack 5 is movable along a guide rail in the third channel 3.

In a preferred embodiment, the towline rack 4 is hinged, at its one end, to the rear end of the first channel 1 of the passenger bridge, and is movable, at its the other end, with respect to the towline rack 5 or the channel 2 with a main beam 7 of the towline rack 5 as a guide rail, so as to ensure required extension and retraction of the cables. Preferably, the main beam 7 is formed of profiled bar. In order to prevent the towline rack 4 from disengaging from the main beam 7, a location limiting device 8 can be arranged at the end B of the towline rack 4, which includes, but not limited to, a double-flanged roller. Of course, the invention is not limited to the main beam as the guide rail, e.g., in some cases, profiled bar can be arranged under the second channel 2 as the guild rail for the towline rack 4.

Similarly, one end of the towline rack 5 is connected to the rear end of the channel 2, so as to be movable with the second channel 2. The other end of the towline rack 5 takes the profiled bar 10 fixed under the channel 3 as a guide rail. Similarly, in order to prevent the towline rack 5 from disengaging from the guide rail 10, a location limiting device 9 is arranged at the end D of the towline rack 5.

As shown in Fig.2, cables can be fed from the end A of the towline rack 4, and extended horizontally along the first towline rack 4, with some of said cables entering into the channel 2 (not shown in Fig. 2). The rest cables go into the end C of the towline rack 5 through the towline 11, extended horizontally along the second towline rack 5, and then reach the third channel 3 (not shown in Fig. 2) through the towline 12. The towline 11 and the towline 12 are stretched as the passenger bridge being extended.

In order to effectively shorten the lengths of the towlines and the cables, the connection point E of the towline 11 with the towline rack 4 and the connection point F of the towline 12 with the towline rack 5 are preferably at the midpoints of the towline rack 4 and the towline rack 5, respectively. That is, the towline 11 is preferably connected, at its one end, to the midpoint of the towline rack 4, and connected, at its the other end, to the second channel 2; while the towline 12 is preferably connected, at its one end, to the midpoint of the towline rack 5, and connected, at its the other end, to the channel 3.

In order to save materials, the lengths of the towline rack 4 and the towline rack 5 can be properly designed, so that the end B of the towline rack 4 can be substantially superposed with the end C of the towline rack 5 as the passenger bridge is fully extended, while the end D of the towline rack 5 can be substantially superposed with the rear end of the third channel 3 as the passenger bridge is fully extended.

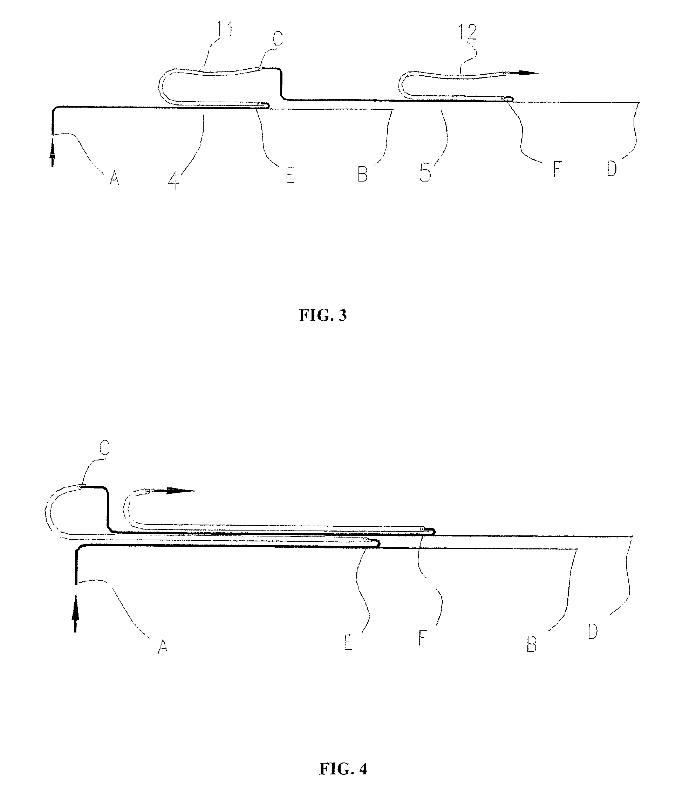

As shown in Fig.3, when the passenger bridge is extended, the third channel 3 tows the towline 12 while the second channel 2 tows the towline 11. When the passenger bridge is retracted, the towline 12 can be retracted into the towline rack 5 under the action of the third channel 3, while the towline 11 can be retracted into the towline rack 4 under the action of the second channel 2.

In order to reduce the moving resistance and prolong the service life of components and parts, both the towline 11 and the towline 12 are arranged horizontally.

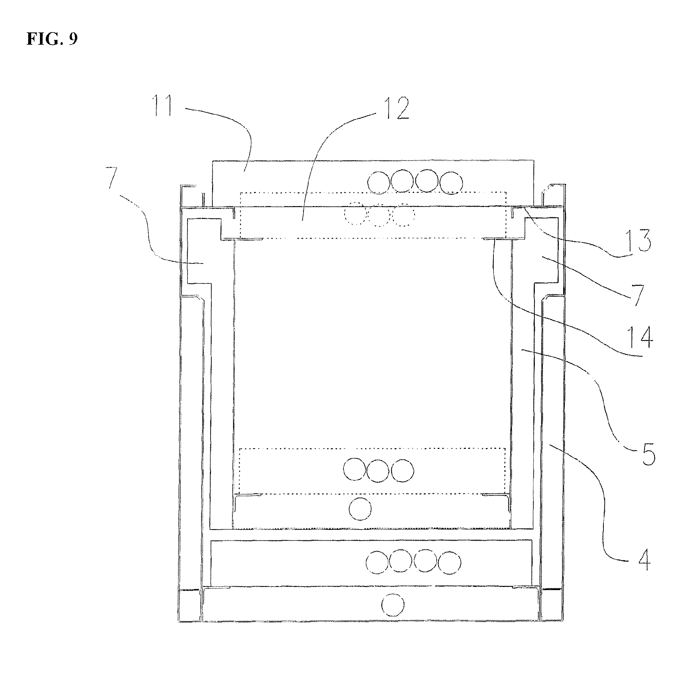

As shown in Figs.4 and 9, to make the structure more compact, the towline racks 4 and 5 can be suitably sized and configured so as to allow the towline rack 5 be superposed with the towline rack 4 when the passenger bridge is retracted, i.e., the towline rack 5 being in the cavity of the towline rack 4. Preferably, the center lines of the towline racks 4 and 5 are coincided.

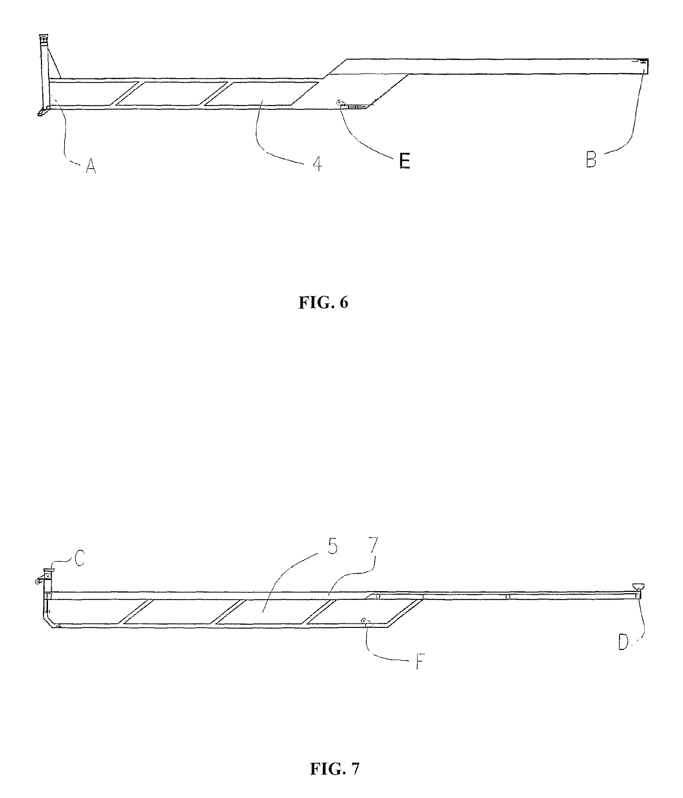

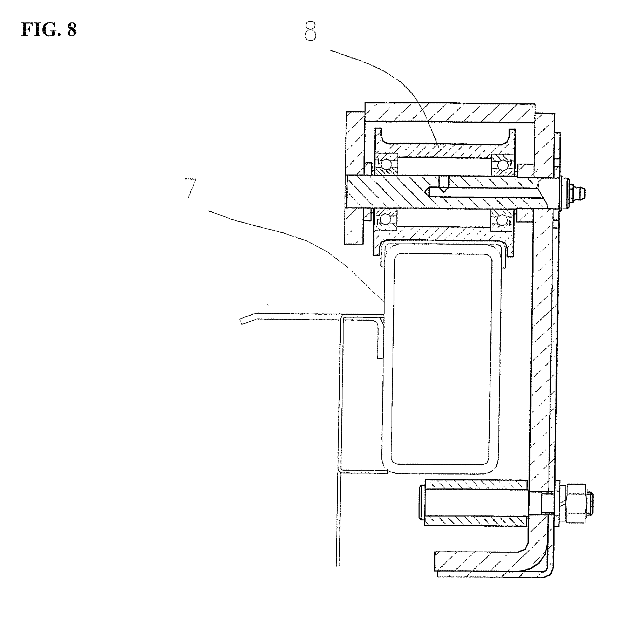

As shown in Fig.6, the towline rack 4 adopts truss structure having tilting bars. The location limiting device 8, as shown in Fig.8, can be arranged at the end B of the towline rack 4. The front portion of the towline rack 4, i.e., the section from the end A to the end E, has a slot-shaped cross section, which is opened at its top as shown in Fig.9.

As shown in Fig.7, the towline rack 5 adopts truss structure having tilting bars. The main beam 7 of it is a profiled bar and can be used as the guide rail for the end B of the towline rack 4. Similarly, the location limiting device 8 as shown in Fig.8 can be arranged at the end D of the towline rack 5. The front portion of the towline rack 5, i.e., the section from the end C to the end F, has a slot-shaped cross section, which is opened at its top as shown in Fig.9

As shown in Fig.8, the guide rail 7 is fitted with the location limiting device 8, so that the end portion of the towline rack can be moved along the guide rail 7 under the action of the location limiting device 8 and other restraining members without disengaging from said guide rail 7.

As shown in Fig.9, when the passenger bridge moves, the towline rack 5 is telescopic within the cavity of the towline rack 4. The width of the towline 11 is required generally to be wider than that of the towline 12. The reason is that, on one hand, since the towlines will be drooped as it is extended, a supporting surface 13 of the towline rack 4 can be used to support the towline 11 while the supporting surface 14 of the towline rack 5 can be used to support the towline 12, so as to resist the drooping of the towlines. On the other hand, since the towline 11 conveys more cables than the towline 12, it requires more space, too.

## Claims

1. A cable conveying device for passenger bridge, especially for a three-channel passenger bridge, comprising a first towline device, which includes a first towline and a first towline rack for carrying cables and disposing the first towline, and a second towline device, which includes a second towline and a second towline rack for carrying cables and disposing the second towline,
**characterized in that,**
the first towline rack is arranged under the first channel and comprises a first fixed end and a first free end, the first fixed end being connected with a rear end of the first channel, the first free end being movable relatively to and along a first guide rail arranged in the second channel, wherein the first towline can be extended horizontally alone the first towline rack with its two ends hinged to the first towline rack and the second channel, respectively; and
the second towline rack is arranged under the second channel and comprises a second fixed end and a second free end, the second fixed end being connected with a rear end of the second channel and movable with said second channel, the second free end being movable relatively to and along a second guide rail arranged in the third channel, wherein the second towline can be extended horizontally on the second towline rack with its two ends hinged to the second towline rack and the third channel, respectively,
wherein, when the second channel is retracted and sheathed into the first channel, the second towline rack is retracted into the first towline rack and is superposed with the same.

2. The cable conveying device for passenger bridge according to Claim 1, **characterized in that** both the first free end of the first towline rack and the second free end of the second towline rack are provided with location limiting devices.

3. The cable conveying device for passenger bridge according to Claim 1, **characterized in that** the center line of the first towline rack is coincided with that of the second towline rack.

4. The cable conveying device for passenger bridge according to Claim 1, **characterized in that** two ends of the first towline are hinged to the middle portion of the first towline rack and the rear end of the second channel, respectively.

5. The cable conveying device for passenger bridge according to Claim 1, **characterized in that** two ends of the second towline are hinged to the middle portion of the second towline rack and the rear end of the third channel, respectively.

6. The cable conveying device for passenger bridge according to one of Claims 1∼5, **characterized in that** the first towline rack is of a truss structure, and the front portion of the first towline rack having a slot-shaped cross section.

7. The cable conveying device for passenger bridge according to Claim 6, **characterized in that** the second towline rack is of a truss structure, and the front portion of the second towline rack having a slot-shaped cross section.

8. The cable conveying device for passenger bridge according to one of Claims 1∼5, **characterized in that** the second towline rack includes a main beam that is served as the first guide.

9. The cable conveying device for passenger bridge according to Claim 2, **characterized in that** the location limiting device is a double-flanged roller.

10. The cable conveying device for passenger bridge according to one of Claims 1∼5, **characterized in that** the first towline has a width wider than the second towline.
